# EUROPEAN PATENT SPECIFICATION

(11) **EP 0 588 926 B1**
(45) Date of publication and mention of the grant of the patent: **18.11.1998**
(21) Application number: 92913381.7
(22) Date of filing: 22.06.1992
(51) Int. Cl.: F16D 65/16, F16D 55/28, F16D 55/36

(54) **BRAKE ASSEMBLY**
BREMSVORRICHTUNG
ENSEMBLE FREIN

(30) Priority: 20.06.1991 US 719130; 31.03.1992 US 861419
(43) Date of publication of application: 30.03.1994
(60) Divisional application: 97110121.7
(73) Proprietor: RANCOURT, Claude, Beauce County, Quebec G5Y 2E1 (CA); RANCOURT, Yvon, Beauce County, Quebec G5Y 2E1 (CA)
(72) Inventor: RANCOURT, Claude 1400 54ième Rue Nord, Beauce County, Quebec G5Y 2E1 (CA); RANCOURT, Yvon 1400 54ième Rue Nord, Beauce County, Quebec G5Y 2E1 (CA); PAQUET, J., Jacques, Thetford Mines, Quebec G6G 7T9 (CA)
(74) Representative: Casalonga, Axel
(86) International application number: CA9200266
(87) International publication number: WO9300525

(56) References cited:
- EP-A- 0 038 370
- EP-A- 0 300 756
- US-A- 3 946 837

## Description

### TECHNICAL FIELD

The present invention relates to the field of disc brakes and more particularly to improvements in large area contact disc brakes for larger vehicles such as trucks, tractor-trailer vehicles in addition to other large wheeled vehicles and aircrafts.

### BACKGROUND ART

Canadian Patents 1,112,189, issued November 10, 1981 and 1,140,486, issued February 1, 1983, and U.S. Patent 4,102,438, issued July 25, 1978, Yvon Rancourt, which are incorporated herein by reference, describe a disc brake for heavy road vehicles wherein the brake shoes are in contact with the much larger disc area, and a suitable brake cooling system is provided to cool the disc, thus making disc brakes practical for such vehicles. The present invention is an improvement over the above-mentioned patent.

There are braking systems available on various types of vehicles which include a positive mechanical brake of the type known as a fail-safe brake, that is, where the brakes are applied when pressure is released from the brakes. U.S. Patent 3,547,234, Cummins, December 15, 1970, describes a service brake for earthmoving trucks or tractors which includes a hydraulic brake system using a plurality of discs, and these discs are mechanically preloaded by a spring to provide a fail-safe brake. U.S. Patent 4,057,297, November 8, 1977, Beck et al, includes a brake system which has been preloaded by means of a spring, including the discs of the type described in the Cummins Patent. This pressurized air operated system uses a series of valves to modify the pressure exerted on the torque converter in order to avoid damage to the differential. This is a system that is utilized in very heavy machinery such as tractors, etc. These patents represent the state of the art in terms of fail-safe type brake systems using preloaded mechanical devices such as springs. The structures are complicated by the need to be adapted on heavy vehicles. What is required is a fail-safe type brake system of simple construction using pneumatic pressure for releasing the brakes and utilizing a simple disc brake construction of the type described in the Rancourt Patent wherein the disc is mounted to the adapter sleeve of a wheel on the vehicle and the brake housing is mounted to the vehicle on a dead axle.

It is also recognized that a major problem with large contact-area annular disc brakes of the type described in the above patents is heat. Great strides in improving heat dissipation were achieved with the introduction of vaned discs as described in U.S. Patent 4,102,438. However, vented discs of the type described required a thicker disc to retain the same strength. It was found for instance that it was not possible to house more than one cast-iron vented disc in an in-wheel brake housing, thus reducing the flexibility of design of such brakes, especially were multiple discs might be an advantage.

Another problem which has had a serious social impact is brake failure due to wear. Presently, there is no known reliable brake wear gauge for determining the remaining life of a particular set of brakes linings on a truck vehicle. It is necessary to remove housing parts on the wheel in order to examine and measure the remaining thickness of the lining and the brake disc. Since such examination adds to the down time of the truck or tractor-trailer, the tendency of the operator or driver-operator is to delay such inspection, with sometimes disastrous results, often costing innocent lives in highway accidents due to failed brakes of such large vehicles.

US-A-3 946 837 discloses a disc brake assembly for a vehicle wheel wherein the wheel includes a hub journaled to an axle of the vehicle. The disc brake assembly includes a housing within the confines of the wheel and concentric with the axle and is mounted to the vehicle and at least an annular radial disc within the brake assembly and means mounting the disc to the wheel. The disc has at least a first radial planar friction surface. Further a first annular brake shoe has at least a planar annular friction surface provided adjacent the first planar friction surface of the disc movable axially towards and away from the first friction surface of the disc for friction engagement therewith and release thereof, means for restraining the first brake shoe from rotating with the disc. In particular, this disc brake assembly comprises stacked discs having an axial dimension much greater than the radial direction. An annular piston is provided for actuating the discs. Oil is provided for cooling for confinement of which plural seals are provided. This disc brake assembly has such dimensions that it cannot be included within the confines of the hub.

EP-A-0 038 370 is directed to a fluid-actuated disc brake assembly having a bladder. This bladder is completely confined on three sides by the walls of the housing and only the end portion can be deformed to press against the moving annular brake shoe.

### DISCLOSURE OF INVENTION

It is an aim of the present invention to provide a disc brake for heavy road vehicles which relies on mechanical means for applying or actuating the brakes.

It is a further aim of the present invention to provide automatic security in the event of a malfunction in the braking system.

It is a further aim of the present invention to provide a parking brake integrated with the disc brake assembly within the same housing in order to free up the axle.

It is a further aim of the present invention to provide a disc brake assembly which has a greater capacity to dissipate heat.

It is a further aim of the present invention to provide an aircraft disc brake assembly which has means to rotate the wheels of an aircraft to provide rotation of the wheels before touch down so that the rate of rotation approximates the rate of rotation after touch down.

As claimed a disc brake assembly for a vehicle wheel on a vehicle, wherein the wheel includes a hub journaled to an axle of the vehicle. The disc brake assembly includes a housing within the confines of the wheel and concentric with the axle and is mounted to the vehicle and at least an annular radial disc within the brake assembly and means mounting the disc to the wheel. The disc has at least a first radial planar friction surface. Further a first annular brake shoe has at least a planar annular friction surface provided adjacent the first planar friction surface of the disc movable axially towards and away from the first friction surface of the disc for friction engagement therewith and release thereof, means for restraining the first brake shoe from rotating with the disc. According to the invention an annular gaseous bladder is provided between a housing wall and the first brake shoe such that when expanded service brakes will be applied by application of the brake shoe to the first friction surface of the disc. A quick release valve means is mounted to the housing wall and communicates with the bladder in order to evacuate gas from the bladder to accelerate the modulation of the bladder, the elements of the disc brake assembly having a greater dimension in the radial direction than in the axial direction.

As claimed, according to an alternative a disc brake assembly for a vehicle wheel is provided wherein the wheel includes a hub journaled to an axle of the vehicle, the disc brake assembly is within the confines of the wheel and concentric with the axle and includes an annular housing mounted to the vehicle and at least an annular radial ventilated disc within the housing and means mounting the disc to the wheel. The disc has at least a first radial planar friction surface. A first annular brake shoe has at least a planar annular friction surface provided adjacent the first planar friction surface of the disc movable axially towards and away from the first friction surface of the disc for friction engagement therewith and release thereof, the first brake shoe being in the form of a radial annular plate having at least a planar surface to engage the first planar friction surface. Means are provided for restraining the first brake shoe from rotating with the disc. An annular intermediate wall member is mounted within the housing and fixed thereto extending parallel with the radial disc and located such that the first brake shoe moves axially between the intermediate wall and the radial disc. A movable spring abutment means is mounted for axial movement within the housing between the intermediate wall and a housing wall such that the intermediate wall is between the movable spring abutment means and the first brake shoe. Rigid pusher link members extend between the spring abutment means and the first brake shoe and pass the intermediate wall such that the first brake shoe moves axially with the spring abutment means. A spring means is arranged between the housing wall and the spring abutment means such that the spring means urges against the spring abutment means to press the first brake shoe against the first friction surface of the disc. A gaseous chamber is provided between the intermediate wall and the spring abutment means whereby this chamber, when expanded, forces the spring abutment means to overcome the spring means to release the first brake shoe from the first friction surface of the disc. According to the invention the elements of the disc brake assembly have a greater dimension in the radial direction than in the axial direction. The brake assembly is provided with means for directing a cooling gas to the ventilated discs in order to dissipate heat therefrom, and the gaseous chamber is a radially extending annular bladder.

In a more specific embodiment of the invention the first brake shoe includes a backing plate mounting brake linings, the backing plate extending parallel to the intermediate wall, lining being adjacent to the first friction surface of radial disc.

In another specific embodiement of the invention the radial ventilated disc is provided with a second radial friction surface on the other side of the disc relative to said first friction surface of the disc. A second annular, radially extending brake shoe is mounted within the housing adjacent the second friction surface of the disc and the means for mounting the disc to the wheel includes an adapter sleeve fixed to the wheel and provided with axial splines such that the disc is capable of axial movement.

In still another specific embodiment of the invention the intermediate wall member and the housing are mounted to a radial mounting ring mounted to the axle.

Further specific embodiments of the invention are subject of the dependent claims.

In this specification, parking or safety brakes means the mechanism which allows the brakes to be applied when the vehicle is not in use or a malfunction should occur in the operation of the service brakes. Active or service brakes refers to the mechanism which provides for the brakes to be applied directly by the operator to slow the vehicle when moving on to bring it to a halt. It is understood that vehicle includes aircraft.

### BRIEF DESCRIPTION OF THE DRAWINGS

Having thus generally described the nature of the invention, reference will now be made to the accompanying drawings, showing by way of illustration, a preferred embodiment thereof, and in which:
Fig. 1 is a fragmentary axial cross-section taken through a brake assembly in accordance with the present invention;
Fig. 2 is an enlarged fragmentary cross-section of a detail of the brake assembly;
Fig. 3 is a further fragmentary enlarged axial cross-section taken of a further detail of the brake assembly;
Fig. 4 is an enlarged fragmentary front elevation of the brake assembly;
Fig. 5 is a horizontal cross-section taken along lines 5-5 of Fig. 4;
Fig. 6 is an enlarged fragmentary side elevation of a detail of the present invention;
Fig. 7 is an enlarged fragmentary vertical cross-section taken along lines 7-7 of Fig. 6;
Fig. 8 is an enlarged fragmentary cross-section of a detail shown in Fig.1.;
Fig. 9 is an enlarged fragmentary front elevation of the brake assembly with parts removed to view further details of the present invention;
Fig. 10 is a fragmentary axial section of another embodiment of a detail of the present invention;
Fig. 11 is an enlarged fragmentary axial section showing still another embodiment of the detail shown in Fig.10;
Fig. 12a is a schematic view of a spring disc which can be used in an embodiment of the present invention; and
Fig. 12b is a graph showing relative spring load characteristics of the spring disc.

### MODES FOR CARRYING OUT THE INVENTION

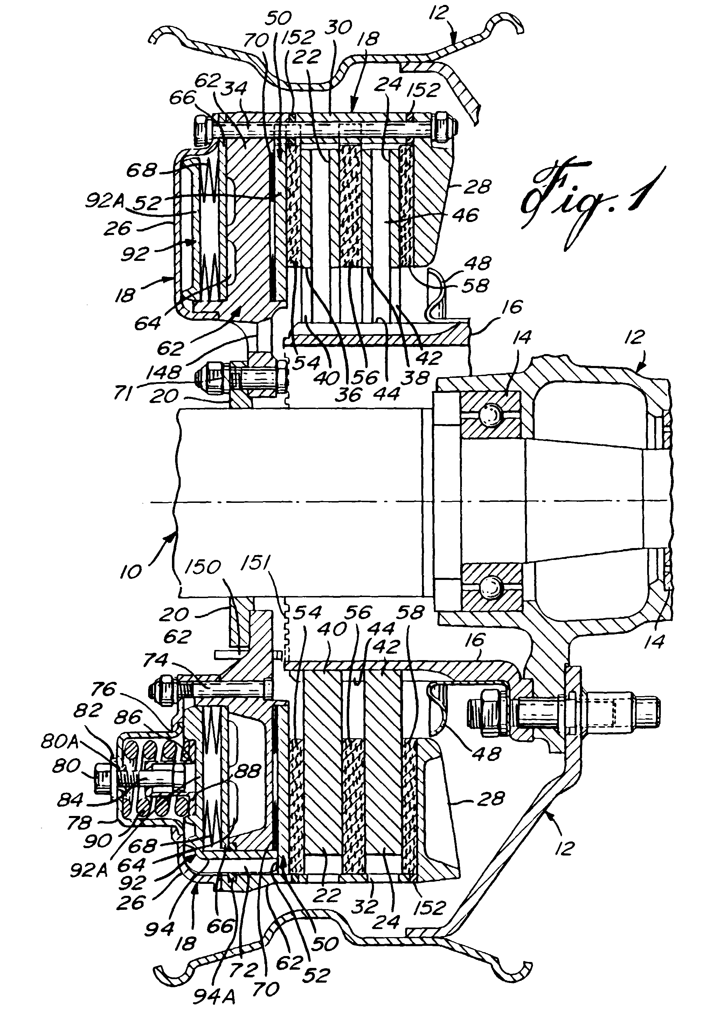

Referring to Figs. 1 to 3 the wheel assembly is shown with an axle 10. Axle 10 is a dead axle and bearings 14 mount the wheel 12 for rotation thereabout. An adapter sleeve 16 is mounted to the wheel 12 and extends concentrically over the axle 10 within the disc brake housing 18. A mounting ring 20 is fixed to the axle 10 and the housing 18 is mounted to the mounting ring 20. Two radial vented rotor discs 22 and 24 are shown within the housing 18. The housing 18 includes an annular housing wall 26 on the inboard side of the assembly, an annular housing wall 28 on the outboard side, and the whole is surrounded by a peripheral wall 30. Ventilation openings 32 are provided in the peripheral wall 30. Nut and bolt arrangements 34 secure the housing walls 26, 28, 30 and intermediate wall 62 together to form the housing 18.

The adapter sleeve 16 has axial splines 44 and the annular rotor brake discs 22 and 24 include disc openings 36 and 38 at the inner margins, respectively and the openings are interspersed with teeth 40 and 42. The teeth 40 and 42 engage the splines 44, thereby providing limited axial movement to the discs 22 and 24 while entraining the discs with the wheel 12.

Each brake disc 22 and 24 is provided with generally radial vent channels 46. It has been found that it is possible to maintain brake discs having vented channels within reasonable axial dimensions or thickness, by making the discs out of a composite of aluminum called "DURALCAN", a trademark of Alcan Aluminum Limited. Thus, it is possible to provide two or more brake discs in a space where only one vented cast iron brake disc was previously possible. The openings 36 and 38 of the discs 22 and 24 provide a ventilation passage as will be described later. An annular air deflector 48 is provided on adapter sleeve 16 in the plane of the housing wall 28.

The brake shoe 50 includes an annular backing plate 52 axially movable within the housing 18 to which is mounted a brake lining 54. The backing plate 52, brake lining 54, and annular brake lining 56 are provided with peripheral slots and teeth which engage between bolts 34 of the housing to restrain them from rotation but to allow them to slide axially. The brake lining 54 is adapted to frictionally engage the planar radial disc surface 22A. Annular brake lining 56 is provided between the discs 22 and 24 while annular brake lining 58 is mounted to the housing wall 28.

Annular spacing rings 152 are provided in the housing wall 30 and on the removal of the spacing rings 152 the housing will be reduced in axial dimension, thereby compensating for the wear on the linings 54, 56 and 58, and the wear on disc 22 and 24, as will be described later.

An intermediate wall 62 is mounted to the mounting ring 20 on the axle 10 by means of bolt and nut arrangements 71. Of course the intermediate wall 62 may be welded to mounting ring 20. The intermediate wall 62 also serves to support the housing wall 26, cylindrical wall 30, and housing wall 28 by means of the nut and bolt arrangements 74 and 34. Ventilation channels 64 are provided in the intermediate wall 62 while axial ventilation openings 148 are provided in spaced apart relationship near the inner opening of the annular intermediate wall 62.

In the present embodiment a plate 66 is placed against the intermediate wall 62 and is bolted thereto by means of nut and bolt arrangements 74 and 34 as shown. This plate 66 acts to support the bladder 68. Bladder 68 is an annular bladder made of stainless steel sheets, welded together as shown in Fig. 2. Air under pressure is fed to the bladder 68 through the tube 106 and inlet 108. Other gases may also be used to inflate the bladder. Stoppers (not shown) may be provided on the plate 66 adjacent the bladder 68 to prevent the bladder 68 from being crushed accidentally.

The spring abutment member 92 is mounted for axial movements relative to the intermediate wall 62. The spring abutment member 92 is in the form of a spider with legs 94 spaced about the periphery of an annular plate 92A and integral therewith. The legs 94 extend through openings 72 in the intermediate wall 62. Seals 94A are provided in the openings 72 surrounding the legs 94 in order to prevent dust, oil or other debris from entering anyfurther into the housing. The legs 94 engage the backing plate 52 near the peripheral edge thereof. In view of the stresses on the peripheral edge of the backing plate 52, the backing plate 52 may be constructed with a slight flare in the direction of the legs to compensate for the stresses which would apply when the legs 94 come into contact at the peripheral edge of the backing plate 52. The ends of legs 94 might also be provided with a slight beveled angle to compensate for such stresses.

Springs 90 urge the spring abutment plate 92 towards the brake shoe 50. A plurality of springs 90 are provided in annular spaced apart locations on the housing wall 26, each within a bell cover 78 fitted within a respective opening 76 on the wall 26. The bell covers 78, in one embodiment have a rotary bayonet type of connection to engage the housing wall 26 so that they can be removed in order to replace the springs 90 for instance. A nut 80 having a flange 82 is provided exteriorly of the bell cover 78. The nut 80 engages the threads of bolt 84. The head of the bolt 84 is in a blind sleeve 86 which has a flange 88 and which abuts the coil spring 90. Thus, if it is necessary to remove the tension of the springs 90 against the spring abutment plate 92 the nut 80 is rotated to point where the head of the bolt 84 moves the blind sleeve 86 towards the left in Fig. 1 thereby releasing the spring 90 from the spring abutment member 92. The nut 80 has a rivet shoulder 80A to retain the nut to the bell cover 78. Although a coil spring 90 is shown, other types of springs such as an annular disc spring may be used.

To provide a service brake, a bladder 70 is contemplated between the intermediate wall 62 and the backing plate 52 of brake shoe 50. The bladder 70 may be supplied with a gaseous fluid under pressure by an inlet similar to inlet 108 and tube 106.

During an emergency or parking brake mode, the springs 90 urge against the spring abutment plate 92 which in turn presses the legs 94 against the backing plate 52 of the brake shoe 50 to press the brake linings 54, 56 and 58 against the wear surfaces on the brake discs 22 and 24.

In other words, when the parking brakes or service brakes are applied, the pressure from the brake shoe assembly 50 moves the disc 22, brake lining 56 and disc 24 axially such that the friction surfaces 22a,b, 24a,b on discs 22, 24 frictionally engage the brake linings 54, 56 and 58.

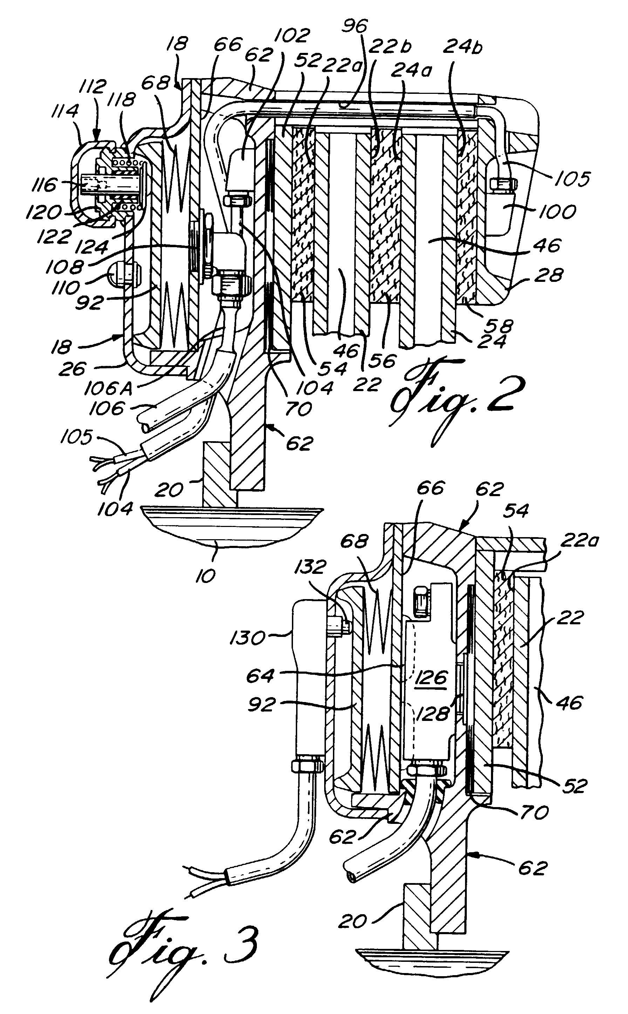

Thus, the springs 90 provide a safety brake, for the vehicle which would typically be a truck, tractor, or trailer. Once the truck or tractor is in operation, and the safety brakes are to be released, air pressure would be supplied to the bladder 68 by means of tube 106 and inlet 108, thereby expanding the bladder 68 to move the spring abutment member 92 axially to overcome the springs 90 and thus removing the pressure on the brake shoe 50, thereby allowing the discs 22 and 24 and thus the wheel to rotate freely. During the operation of the vehicle, when it is necessary to apply the active brakes, air pressure would be directed through inlet 128 (Fig.3) to the bladder 70 in order to move the brake shoe 50 axially to positively apply the brakes. At the same time, air pressure could be released from the bladder 68, if necessary, although it is contemplated that the safety brakes would normally be kept released during operation.

As a safety feature, if the air pressure was to fall under a predetermined level, the springs 90 would overcome the bladder 68 and cause the safety brakes to be applied.

A quick release valve 126 is located on the intermediate wall 62 and communicates with the bladder 70. The quick release valve 126 will operate when it is required to deflate the bladder 70. At the same time the exhaust from the quick release valve will be directed along the intermediate wall 62 through ventilation channels 64 thereby enabling the intermediate wall 62 to be cooled as well as the adjoining parts of the housing such as plate 66. The gas under pressure within the bladder 70 cools during decompression as it is released.

On the other hand a choke or restricted passage 106A is provided on the conduit 106 to provide a slow release from the bladder 68 in order to avoid sudden violent application of the safety brakes while the vehicle is moving if a service brake malfunction should occur. A time delay valve might also be provided instead of the choke.

It has been contemplated to interconnect the bladders 68 and 70 by suitable valves to allow air to pass from one bladder to the other in the event that it is desirable to apply the parking brakes and the service brakes simultaneously. However, in most cases, the bladders 68 and 70 would be operated independently.

The end edge of the sleeve 16 may be provided with teeth and an antilock-brake sensor or counter sensor 150 may be mounted to the intermediate wall 62 as shown in Fig. 1 for the purpose of sensing the movement of the teeth 151 as the adapter sleeve 16 rotates.

As shown in Fig. 2 the brake assembly is provided with a thermal sensor 102 connected to the intermediate wall 62 and having a lead 104. A thermal sensor 100 may be provided on the housing wall 28 with a lead 105 extending through a passage 96 provided for in the housing wall 30. The thermal sensors 100 and 102 can provide temperature data with respect to the heat generated in the disc brake assembly, particularly near the disc. For instance the sensor 100 is right at the housing wall 28 next to the brake lining 58 near the disc 24. The thermal sensor 102 will indicate the temperature of the intermediate wall 62. Other sensors may be provided. The sensors 100 and 102 communicate with a temperature indicator on the control panel in the vehicle. Only one wheel may need be monitored in such a manner as it will give an indication of the type of heat generated in all the wheels of the same vehicle.

A warning device, connected to the brake thermal sensors, may be provided on the control panel in the cab. The warning device may be an audible signal such as a buzzer or a recorded voice, or a visual diode graphic screen with different colours to provide information on the temperature of the brakes. As is well known when the temperature of the brakes reaches a certain temperature, the brake pads begin to break down chemically, causing brake fading. The warning device could alert the operator to stop the vehicle in order to allow the brakes to cool down before the brakes reach a temperature level that might cause failure.

Another feature provided in the brake assembly described herein is a wear sensor as shown in Figs. 2 and 3. Because of the particular axial movement of the present brake assembly a wear sensor can be provided between the housing wall 26 and the spring abutment member 92 and the distance between the two elements measured, particularly when the brakes are applied through the parking brakes under the urging of springs 90.

In one embodiment as shown in Fig. 2 the wear sensor 112 includes a rubber cap 114 and a plunger 116 urged by a spring 118 within a blind sleeve 120. A bearing sleeve 122 is provided within the sleeve 120 to allow the plunger to slide towards the spring abutment member 92 under the urging of the spring 118. The plunger is provided with a flange 124 to receive the spring 118.

Another form of wear sensor is shown in Fig. 3. Wear sensor 130 is an electronic sensor including a plunger 132, spring mounted within the sensor 130, and urged against the spring abutment member 92. Sensor 130 communicates with a brake wear indicator on the control panel in the cab. Only one wheel need be monitored as it give a reliable indicator of the amount of wear occurring at all the wheels of a vehicle.

A still further wear sensor could be provided by allowing an opening in the housing wall 26, closed by a rubber nipple 110. When the rubber nipple is removed a measuring gauge can be inserted to determine the distance between the wall 26 and the spring abutment member 92 when the parking brake is applied.

It is also contemplated to provide the brake sensors on the housing wall 28 so that the measurements can be taken against a backing plate associated with brake shoe 58 when the latter is made to move axially and the bladder 70 is mounted on the wall 28 (not shown). The service brake must be applied in order to take a proper reading.

With the use of the brake wear sensors or gauges a warning device can be provided on the control panel in the cab of the vehicle which would include an audible signal such as a buzzer when the brake linings and discs have been worn to a predetermined level to at least warn the operator to replace the brake linings and discs or at least plan the maintenance thereof. It may even be contemplated to provide an interlock which would intervene at the parking brake control valve to impede the release of the parking brakes when the brake wear has exceeded accepted levels of wear. In any event the brake wear system can give warning or control at different levels of brake wear.

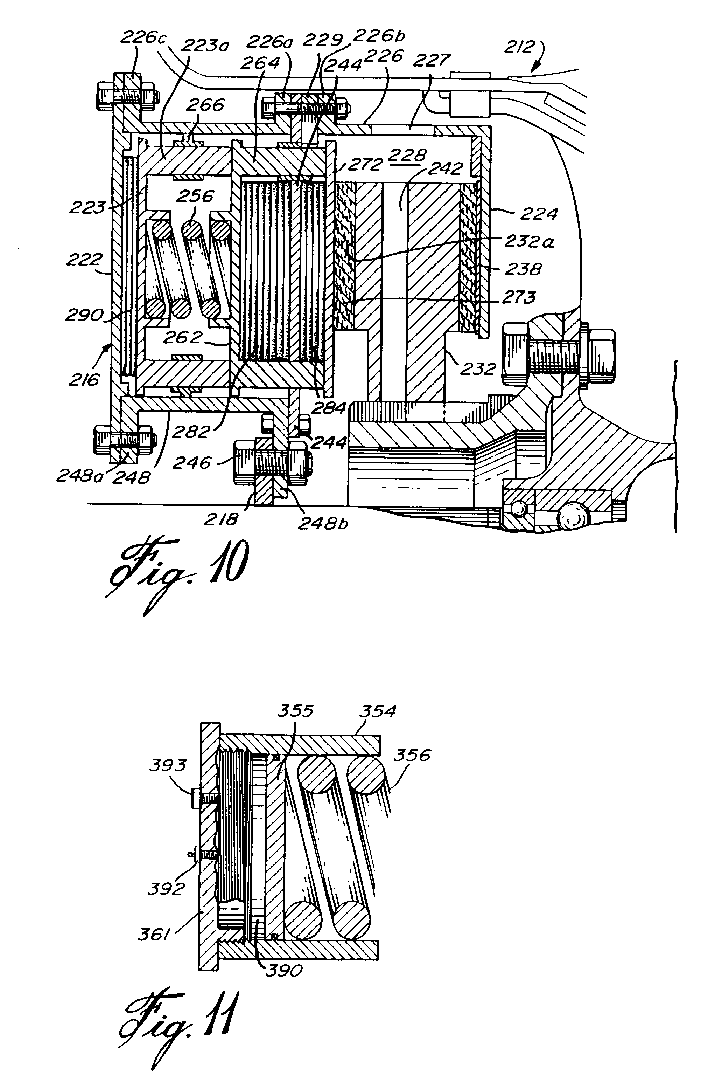

A ventilation system for the disc brakes is provided. As partially, previously described and shown in Figs. 1 and 9, openings 148 are located in the intermediate wall 62 and as shown in Fig. 4 a plenum 134, in the form of an annular cover, may be placed over the openings 148. The plenum 134 communicates with a scoop 136. The scoop 136 may be mounted on the housing wall 26 and would be facing the normal direction of travel of the vehicle so that air flow would be deflected into the plenum 134, through the openings 148 to the discs 22 and 24 and in particular through the openings 36 and 38. Because of deflector or baffle 48 the air would be forced upwardly through the ventilation channels 46 of the discs 22 and 24. The baffle 48 could be eliminated if the disc 24 is closed to the adapter sleeve 16. The discs 22 and 24 act as impellers creating a negative pressure in the area of the openings 36 and 38 thereby drawing air and pumping it to the periphery of the discs and exhausting it through the ventilation openings 32 allowing a great amount of heat to be dissipated in this way. The scoop 136 and the plenum 134 may be a molded plastic member with a hinge 138 molded therein along with nut and bolt adjustments 140 to open or reduce the opening of the scoop 136.

It has been contemplated to use this ventilation system for a different purpose, such as in an aircraft utilization. Accordingly, by providing a similar brake configuration on the wheels of the landing gear of an aircraft, that is with scoop 136, ventilation openings 32 and ventilated discs 22 and 24, a considerable flow of air can be passed through the (released) brakes ventilation system causing the wheels to rotate. It is particularly useful to have the wheels rotating at an equivalent ground speed, at the moment of landing. In order to control the rate of rotation of the wheels, that is so that they do not overrotate, the scoop 136 may be remotely adjusted and the active brakes could be applied. The wheel speed may be calibrated to the ground speed of the aircraft using a microprocessor using information from the counter sensor 150 and the aircraft ground speed data. The precise rate of rotation could be achieved by having the microprocessor modulate the scoop opening and the brakes to compensate for the excess of torque generated by the air flow through the brakes. This would be an important safety factor with respect to aircraft tires.

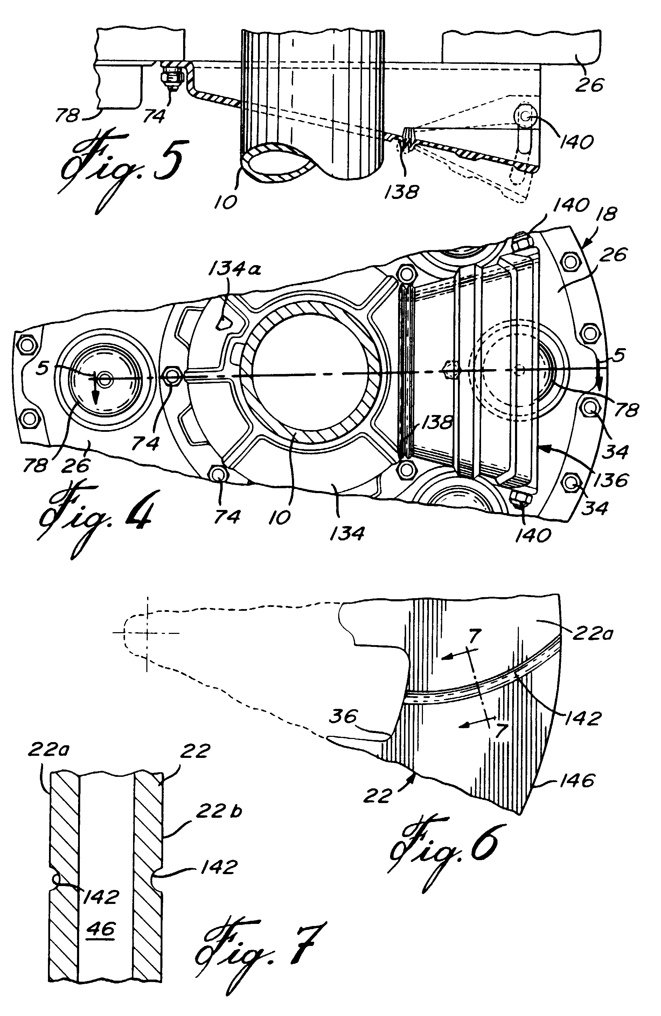

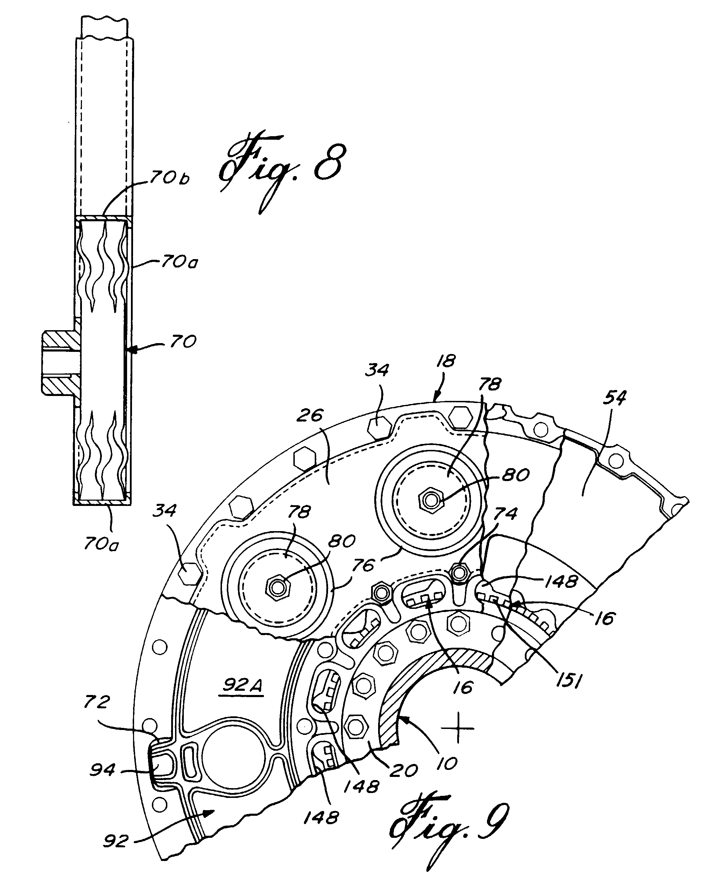

A fragment of a brake disc 22 is shown in Figs. 6 and 7 with the surfaces 22A and 22B illustrated. A groove 142 extends somewhat radially of the surfaces 22A and 22B and has a semi-circular cross-section. In a specific example, the groove may be 2,28 mm (0.09") in depth with a width of 6,35 mm (0.25") and a radius of 3,17 mm (1/8 of an inch). It has been found that the provision of such a groove allows air to enter, when the brakes are released and the discs are rotating, to form a slight air cushion between the brake linings and the friction surface on the disc, thereby eliminating dragging and helping to cool the friction surfaces. At the same time the groove allows the brake surfaces to be cleaned by providing a drainage channel for any liquid forming on the brake linings or debris between the friction surface of the disc and the linings.

It has also been found that by providing a coating on the disc brake surface the heat is more easily dissipated. This coating may be a ceramic with aluminum particulates mixed therein and which has a particular heat sink and wear resistance properties. The coating may also be titanium carbo-nitride or chromium carbide. A coating is presently being developed by "SERMATECH INTERNATIONAL INC." for military purposes.

It has also been contemplated to provide a spray mix where water is sprayed into the plenum 134 through opening 134a to mix with ventilation air being deflected into the brake assembly to enhance the cooling of the brake assembly.

In the present embodiment, and as shown in Fig. 8, the bladder 70, which is in the form of an annular ring, is provided with an external annular dust cap 70a and an internal dust cap 70b. The dust caps 70a and 70b are provided to prevent debris from entering between the accordion like fins formed in the bellows-like bladder.

In the embodiment shown in Fig. 10, the bladder 290 adjusts the distance between lining 273 and friction surface 232a of disc 232, as will be described. In this embodiment, plate 223 is provided with integral posts 223a, which slide in bushings 266 mounted to the circumferential wall 226. The bushings 266 prevent posts 223a from jamming and thus plate 262 to slide parallel to intermediate wall 244. These posts 223a engage against the movable plate 262. Posts 264 extend from plate 262 to engage the backing plate 272.

A bladder 290 is provided between plate 223 and housing wall 222 which is bolted to the housing walls 226 and 248, as shown. The bladder 290 may be oil or grease filled. In either case, the increase of the volume in the bladder 290 will tend to distance the plate 223 from the wall 222, thereby moving the parking brake assembly including spring 256, spring abutment plate 262, posts 264, backing plate 272, and lining 273 closer to the disc 232. When the posts 223a have engaged the plate 262, the bladder 290 is used to compensate for brake disc or lining wear by pressing the plate 223 and posts 223a against the cage formed by plate 262 and posts 264.

As shown in Fig. 10, the bladders 282 and 284, which are operated by air pressure, can be controlled to either act as a positive force to apply the brakes, that is, when air pressure is increased in bladder 284 and bladder 282 is deflated, or to remove the brakes against the force of spring 256 by increasing the air pressure in bladder 282 and deflating bladder 284.

It is also contemplated that the bladders 70, 284, in Figs. 1 and 10 respectively, could be located between the housing walls 28, 224 and a backing plate for brake linings 58, 238.

Instead of the bladder 290, the compensation for brake wear could be provided by the compensating ring 229. Ring 229 is a segmental ring which can easily be removed from between intermediate wall 244 and flange 226b of housing wall 226. A compensating ring (not shown) may be provided between intermediate wall 244 and flanges 248b and 226a. The compensating ring 229 could also be placed between the housing wall 222 and the mounting flange 226c therefor. A compensating ring (not shown) would then be mounted between wall 222 and flange 248a. The idea is to allow for a decrease of the axial length of the housing 216 in order to compensate for wear of all parts of the braking system.

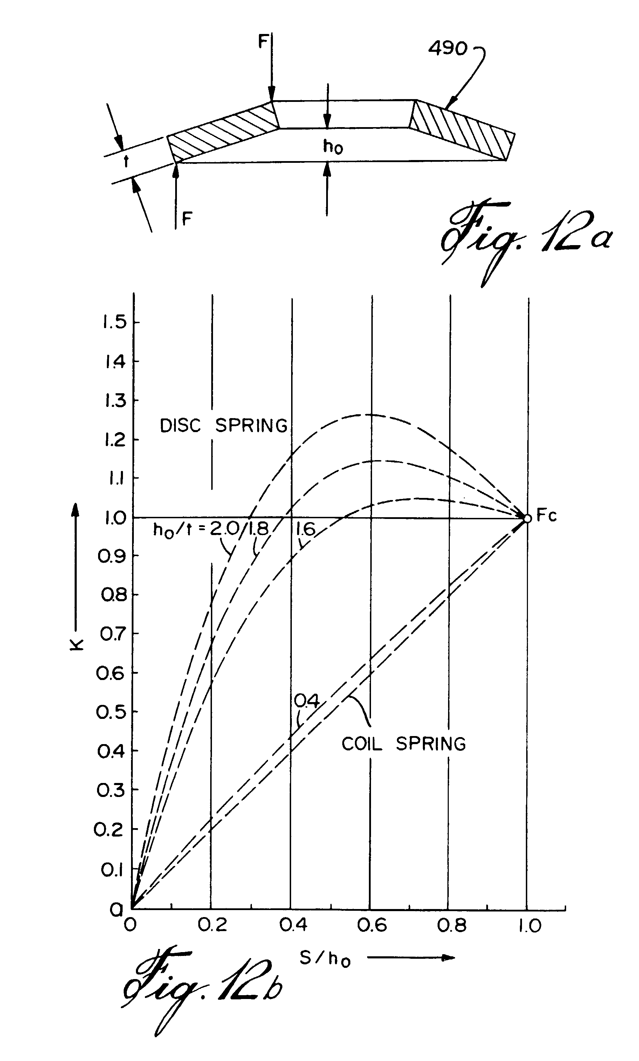

Fig. 11 shows an embodiment of the device for adjusting the spring length to increase the force against the brake shoes or for compensating for brake wear. In the embodiment shown, a grease nipple 392 in cap 361 can be utilized to insert grease or oil into the cavity 390 to displace the wall 355 in cylinder 354. When it is required to release the spring 356, the plug 393 can be released to allow the grease or oil to exit, thereby allowing the wall 355 to slide towards the cap 361.

In another embodiment, disc springs 490 could be used instead of coil springs 90,256,356. A single disc spring is illustrated in Fig. 12a and the characteristics thereof are shown in Fig. 12b. For a more ample description of the disc spring reference is made to the "Schnorr Handbook for Disc Springs" published 1983 by Adolf Schnorr GmbH & Co. KG, P.O. Box 60, D-7032 Sindelfingen 6, Germany. It has been found that by stacking disc springs in different configurations, different spring rates can be obtained.

One characteristic of the disc spring which is particularly useful is that the full deflection spring load characteristic does not decrease until a large percentage of the spring deflection has occurred, i.e. approximately 50% to 70% when ho/t is larger than 1.6 and smaller than 2.0. The distance represented by the travel within these limits may represent the compensation for wear. With other spring characteristics the same travel, i.e. 50% to 70% would result in a significant reduction in the spring load characteristic as shown in Fig. 12b where
- ho: represents the formed height of an unloaded single disc in mm;
- t: represents the thickness of a single disc spring in mm;
- S: is the deflection in mm;
- K: = F/Fc;
- F: is the spring load;
- Fc: is the calculated load given by a single disc pressed flat.

## Claims

1. A disc brake assembly for a vehicle wheel (12) wherein the wheel (12) includes a hub journaled (14) to an axle (10) of the vehicle, the disc brake assembly includes a housing (18) within the confines of the wheel (12) and concentric with the axle (10), the disc brake assembly mounted to the vehicle and at least an annular radial disc (22, 24) within the brake assembly and means (16, 44) mounting the disc (22, 24) to the wheel (12), the disc (22, 24) having at least a first radial planar friction surface (22a, b, 24a, b), a first annular brake shoe (50, 58) having at least a planar annular friction surface provided adjacent the first planar friction surface (22a, b, 24a, b) of the disc (22, 24) movable axially towards and away from the first friction surface (22a, b, 24a, b) of the disc (22, 24) for friction engagement therewith and release thereof, means for restraining the first brake shoe (50, 58) from rotating with the disc (22, 24), the disc brake assembly being characterized in that an annular gaseous bladder (70) is provided between a housing wall (28, 62) and the first brake shoe (50, 58) such that when expanded service brakes will be applied by application of the brake shoe (50, 58) to the first friction surface (22a, b, 24a, b) of the disc (22, 24), a quick release valve means (126) is mounted to the housing wall and communicates with the bladder (70) in order to evacuate gas from the bladder (70) to accelerate the modulation of the bladder, the elements of the disc brake assembly having a greater dimension in the radial direction than in the axial direction.

2. The disc brake assembly as defined in claim 1, wherein an annular intermediate wall member (62) is mounted within the housing (18) and fixed thereto extending parallel with the radial disc (22, 24) and located such that the first brake shoe (50) moves axially between the intermediate wall (62) and the radial disc (22, 24), a movable spring abutment means (92) is mounted for axial movement within the housing (18) between the intermediate wall (62) and a housing wall (26) such that the intermediate wall (62) is between the movable spring abutment means (92) and the first brake shoe (50), rigid pusher link members (94) extend between the spring abutment means (92) and the first brake shoe (50) and pass the intermediate wall (62) such that the first brake shoe (50) moves axially with the spring abutment means (92), a spring means (90) is arranged between the housing wall (26) and the spring abutment means (92) such that the spring means (90) urges against the spring abutment means (92) to press the first brake shoe (50) against the first friction surface (22a) of the disc (22, 24), a gaseous chamber (68) is provided between the intermediate wall (62) and the spring abutment means (92) whereby this chamber (68), when expanded, forces the spring abutment means (92) to overcome the spring means (90) to release the first brake shoe (50, 58) from the first friction surface (22a) of the disc (22, 24).

3. A disc brake assembly for a vehicle wheel (12) wherein the wheel (12) includes a hub journaled (14) to an axle (10) of the vehicle, the disc brake assembly is within the confines of the wheel (12) and concentric with the axle (10), the disc brake assembly includes an annular housing (18) mounted to the vehicle and at least an annular radial ventilated disc (22, 24) within the housing (18) and means (16, 44) mounting the disc (22, 24) to the wheel (12), the disc (22, 24) having at least a first radial planar friction surface (22a, b, 24a, b), a first annular brake shoe (50, 58) having at least a planar annular friction surface provided adjacent the first planar friction surface (22a, b, 24a, b) of the disc (22, 24) movable axially towards and away from the first friction surface (22a, b, 24a, b) of the disc (22, 24) for friction engagement therewith and release thereof, the first brake shoe (50, 58) being in the form of a radial annular plate having at least a planar surface to engage the first planar friction surface, means are provided for restraining the first brake shoe (50) from rotating with the disc (22, 24), an annular intermediate wall member (62) is mounted within the housing (18) and fixed thereto extending parallel with the radial disc (22, 24) and located such that the first brake shoe (50) moves axially between the intermediate wall (62) and the radial disc (22, 24), a movable spring abutment means (92) is mounted for axial movement within the housing (18) between the intermediate wall (62) and a housing wall (26) such that the intermediate wall (62) is between the movable spring abutment means (92) and the first brake shoe (50), rigid pusher link members (94) extend between the spring abutment means (92) and the first brake shoe (50) and pass the intermediate wall (62) such that the first brake shoe (50) moves axially with the spring abutment means (92), a spring means (90) is arranged between the housing wall (26) and the spring abutment means (92) such that the spring means (90) urges against the spring abutment means (92) to press the first brake shoe (50) against the first friction surface (22a) of the disc (22, 24), a gaseous chamber (68) is provided between the intermediate wall (62) and the spring abutment means (92) whereby this chamber (68), when expanded, forces the spring abutment means (92) to overcome the spring means (90) to release the first brake shoe (50) from the first friction surface (22a) of the disc (22, 24), characterized in that the elements of the disc brake assembly have a greater dimension in the radial direction than in the axial direction, the brake assembly is provided with means for directing a cooling gas to the ventilated discs in order to dissipate heat therefrom, and the gaseous chamber is a radially extending annular bladder (68).

4. The disc brake assembly as defined in any of claims 1 to 3, wherein the first brake shoe (50) includes a backing plate (52) mounting brake linings (54), the backing plate (52) extending parallel to the intermediate wall (62), lining (54) being adjacent to the first friction surface (22a) of radial disc (22, 24).

5. The disc brake assembly as defined in any of claims 1 to 4, wherein the radial ventilated disc (22, 24) is provided with a second radial friction surface (24b) on the other side of the disc (22, 24) relative to said first friction surface (22a) of the disc (22, 24), and a second annular, radially extending brake shoe (58) is mounted within the housing (18) adjacent the second friction surface (24b) of the disc (22, 24) and the means for mounting the disc (22, 24) to the wheel includes an adapter sleeve (16) fixed to the wheel (12) and provided with axial splines (44) such that the disc (22, 24) is capable of axial movement.

6. The disc brake assembly as defined in any of claims 1 to 5, wherein the intermediate wall member (62) and the housing (18) are mounted to a radial mounting ring (20) mounted to the axle (10).

7. The disc brake assembly as defined in any of claims 1 to 6, wherein the annular housing (18) is provided with a central axial opening through which the axle (10) extends therethrough, and a mounting ring (20) in the form of an annular ring is mounted to the axle (10) to which the housing (18) and the intermediate wall (62) are mounted, the disc mounting means includes an adapter sleeve (16) having axial splines (44), the disc (22, 24) is an annular disc mounted on the axial splines (44) of the adapter sleeve (16) which extends from the wheel (12) through a central opening (42) of the disc.

8. The disc brake assembly as defined in any of claims 1 to 7, wherein the first annular ventilated radial disc (22) has two radial planar friction surfaces (22a, 22b) and at least a second annular ventilated radial disc (24) has at least a first radial planar friction surface (24a), an annular brake lining (56) is provided between the radial discs (22, 24), and means are provided for restraining the brake lining (56) from rotating with the discs (22, 24) but allowing axial movement thereof and the means for mounting the radial discs (22, 24) includes an adapter sleeve (16) fixed to the wheel (12) and provided with axial spline (44) such that at least the first radial disc (22) is capable of axial movement.

9. The disc brake assembly as defined in claim 8, wherein the second radial disc (24) is provided with a second radial friction surface (24b) on the other side of the second radial disc (24) relative to the first friction surface (22a) of the first radial disc (22), and a second annular brake shoe (58) is mounted within the housing (18) adjacent the second friction surface (24b) of the disc (24), means are provided for restraining the second brake shoe (58) from rotation with the second radial disc (24) and the means for mounting the first and second radial disc (22, 24) to the wheel includes an adapter sleeve (16) fixed to the wheel (12) and provided with axial spline (44) such that the discs (22, 24) are capable of axial movement.

10. The disc brake assembly as defined in any of claims 1 to 9, wherein there is at least two annular rotor discs (22, 24).

11. The disc brake assembly as defined in claims 1 or 2, wherein dust caps (70a, 70b) are provided along the inner and outer margins of the bladder (70).

12. The disc brake assembly as defined in any of claims 2 to 11, wherein the spring means (90) includes circumferentially spaced apart openings (76) defined on a housing wall (26), bell covers (78) provided, one in each opening (76), and a spring member (90) in each bell cover (78) extending between the bell cover (78) and the spring abutment means (92).

13. The disc brake assembly as defined in any of claims 2 to 12, wherein the spring member (90, 256, 356) is a coil spring.

14. The disc brake assembly as defined in any of claims 2 to 12, wherein the spring member (90, 256, 356) is a disc spring.

15. The disc brake assembly as defined in any of claims 2 to 14, wherein seal means (94A) are provided between each pusher link member (94) and the intermediate wall (62).

16. The disc brake assembly as defined in claim 14 or 14 and 15, wherein the quotient from the formed heigh dimension of an unloaded single disc divided by its thickness dimension is larger than 1.5.

17. The disc brake assembly as defined in any of claims 1 to 16, wherein at least a shallow groove (142) is defined across the braking surface (22a, 22b, 24a, 24b) generally radially thereof, whereby an air cushion can be provided between the rotor disc (22, 24) and the brake shoe means (50) when the rotor disc (22, 24) is rotating and the brake shoe means (50) is released from the braking surface (22a, 22b, 24a, 24b) of the disc (22, 24) and the groove (142) provides a drainage channel for removing debris from between the brake shoe means (50) and the braking surface (22a, 22b, 24a, 24b) of the disc (22, 24).

18. The disc brake assembly as defined in any of claims 1 to 17, wherein the disc (22, 24) has a plurality of circumferentially spaced channels (46) extending from the periphery of the disc towards the center to communicate with central openings (36, 38) at the inner margin of the annular disc (22, 24) such that cooling air can pass from the central openings (36, 38) at the inner margin of the annular disc (22, 24) to exhaust at the outer periphery thereof in order to dissipate heat generated in the disc (22, 24) wherein the disc (22, 24) is composed of an aluminum composite known as DURALCAN (a trademark of Alcan Aluminum Limited).

19. The disc brake assembly as defined in any of claims 1 to 18, wherein
a spring means (90) is arranged between the housing wall (26) and the spring abutment means (92) such that the spring means (90) urges against the spring abutment means (92) to press the first brake shoe against the first friction surface (22a) of the disc (22, 24),
the spring means (90) includes circumferentially spaced-apart openings (76) defined on a housing wall (26), bell covers (78) are provided, one in each opening (76), and a spring member (90) in each bell cover (78) extending between the bell cover (78) and the spring abutment means (92) wherein the bell cover (78) has a bayonet engagement with the housing wall (26) at each opening (76).

20. The disc brake assembly as defined in any of claims 1 to 19 wherein a bell cover (78) is provided exteriorly with a nut (80) having a flange (82), the nut (80) engages the treads of a bolt (84), the head of the bolt (84) is in a blind sleeve (86), blind sleeve (86) is within the spring means (90) and has a flange (88) which abuts the spring means (90), such that if it is necessary to remove the tension of the spring means (90) against the spring abutment means (92), the nut (80) is rotated to the point where the head of the bolt (84) presses against the blind sleeve (86).

21. The disc brake assembly as defined in any of claim 3 to 20 wherein a second annular, radially extending, gaseous bladder (70) is provided between he brake shoe (50) and the intermediate wall (62) such that, when the active brakes are applied, fluid pressure is applied to expand the second bladder (70) so as to urge the first brake shoe (50) against the first friction surface (22a) of the disc (22, 24), and when fluid pressure is applied to expand the second bladder (70), the first bladder (68) is deflated such that the spring abutment means (92) urges against the first brake shoe (50) supplementing the action of the second bladder (70).

22. The disc brake assembly as defined in any of claims 2 to 21 wherein the end of the rigid pusher link members (94) are provided with a slight beveled angle.

23. The disc brake assembly as defined in any of claims 4 to 22 wherein the backing plate (52) is constructed with a slight flare in the direction of the rigid pusher link members (94).

## Patentansprüche

1. Scheibenbremsenanordnung für ein Fahrzeugrad (12), wobei das Rad (12) eine Nabe aufweist, die an einer Achse (10) des Fahrzeuges gelagert (14) ist, die Scheibenbremsenanordnung ein Gehäuse (18) innerhalb der Ränder des Rades (12) und konzentrisch mit der Achse (10), welche Scheibenbremsenanordnung am Fahrzeug angebracht ist, und wenigstens eine ringförmige radiale Scheibe (22, 24) in der Bremsanordnung und Einrichtungen (16, 44) zum Anbringen der Scheibe (22, 24) an dem Rad (12) aufweist, wobei die Scheibe (22, 24) wenigstens eine erste radiale planare Reibfläche (22a, b, 24a, b) , einen ersten ringförmigen Bremsschuh (50, 58) mit wenigstens einer planaren ringförmigen Reibfläche, die neben der ersten planaren Reibfläche (22a, b, 24a, b) der Scheibe (22, 24) vorgesehen ist, der axial zur ersten Reibfläche (22a, b, 24a, b) der Scheibe (22, 24) und von dieser weg bewegbar ist, um damit in Reibineingriffnahme zu kommen und sich davon zu lösen, und Einrichtungen zum Hindern einer Drehung des ersten Bremsschuhs (50, 58) mit der Scheibe (22, 24) aufweist, welche Scheibenbremsenanordnung dadurch gekennzeichnet ist, daß ein ringförmiger Gasbalg (70) zwischen einer Gehäusewand (28, 62) und dem ersten Bremsschuh (50, 58) so vorgesehen ist, daß dann, wenn er ausgedehnt wird, Servobremsen wirken, indem die erste Reibfläche (22a, b, 24a, b) der Scheibe (22, 24) durch den Bremsschuh (50, 58) beaufschlagt wird, eine Schnellöseventileinrichtung (126) an der Gehäusewand angebracht ist, die mit dem Balg (70) in Verbindung steht, um das Gas vom Balg (70) abzuführen und dadurch die Modelierung des Balges zu beschleunigen, wobei die Bauelemente der Scheibenbremsenanordnung eine größere Abmessung in radialer als in axialer Richtung haben.

2. Scheibenbremsenanordnung nach Anspruch 1, bei der ein ringförmiges Zwischenwandelement (62) im Gehäuse (18) angebracht und daran so befestigt ist, daß es parallel zur radialen Scheibe (22, 24) verläuft, und derart angeordnet ist, daß sich der erste Bremsschuh (50) axial zwischen der Zwischenwand (62) und der radialen Scheibe (22, 24) bewegt, eine bewegliche Federgegenlagereinrichtung (92) axial bewegbar im Gehäuse (18) zwischen der Zwischenwand (62) und einer Gehäusewand (26) so angebracht ist, daß sich die Zwischenwand (62) zwischen der bewegbaren Federgegenlagereinrichtung (92) und dem ersten Bremsschuh (50) befindet, starre Stoßverbindungselemente (94) zwischen der Federgegenlagereinrichtung (92) und dem ersten Bremsschuh (50) verlaufen und durch die Zwischenwand (62) so hindurchgehen, daß sich der erste Bremsschuh (50) axial mit der Federgegenlagereinrichtung (92) bewegt, eine Federeinrichtung (90) zwischen der Gehäusewand (26) und der Federgegenlagereinrichtung (92) so angeordnet ist, daß die Federeinrichtung (90) gegen die Federgegenlagereinrichtung (92) drückt, um den ersten Bremsschuh (50) gegen die erste Reibfläche (22a) der Scheibe (22, 24) zu drücken, eine Gaskammer (68) zwischen der Zwischenwand (62) und der Federgegenlagereinrichtung (92) vorgesehen ist, wobei diese Kammer (68) dann, wenn sie ausgedehnt wird, die Federgegenlagereinrichtung (92) so beaufschlagt, daß die Federeinrichtung (90) überwunden wird und dadurch der erste Bremsschuh (50, 58) von der ersten Reibfläche (22a) der Scheibe (22, 24) gelöst wird.

3. Scheibenbremsenanordnung für ein Fahrzeugrad (12), wobei das Rad (12) eine Nabe aufweist, die an einer Achse (10) des Fahrzeuges gelagert (14) ist, die Scheibenbremsenanordnung innerhalb der Ränder des Rades (12) und konzentrisch zur Achse (10) angeordnet ist, die Scheibenbremsenanordnung ein ringförmiges Gehäuse (18), das am Fahrzeug angebracht ist, und wenigstens eine ringförmige radiale belüftete Scheibe (22, 24) im Gehäuse (18) und Einrichtungen (16, 44) aufweist, die wenigstens eine erste radiale planare Reibfläche (22a,b, 24a,b) aufweisen, einen ersten ringförmigen Bremsschuh (50, 58) mit wenigstens einer planaren ringförmigen Reibfläche, die neben der ersten planaren Reibfläche (22a,b, 24a,b) der Scheibe (22, 24) vorgesehen ist, der axial zur ersten Reibfläche (22a,b, 24a,b) der Scheibe (22, 24) und davon weg bewegbar ist, um damit in Reibineingriffnahme zu kommen und davon gelöst zu werden, wobei der erste Bremsschuh (50, 58) in Form einer radialen Ringplatte mit wenigstens einer planaren Fläche zur Ineingriffnahme mit der ersten planaren Reibfläche ausgebildet ist, und Einrichtungen zum Hindern einer Drehung des ersten Bremsschuhs (50) mit der Scheibe (22, 24) vorgesehen sind, ein ringförmiges Zwischenwandelement (62) im Gehäuse (18) angebracht und darin so befestigt ist, daß es parallel zur radialen Scheibe (22, 24) verläuft, und derart angeordnet ist, daß sich der erste Bremsschuh (50) axial zwischen der Zwischenwand (62) und der radialen Scheibe (22, 24) bewegt, eine bewegbare Federgegenlagereinrichtung (92) axial bewegbar im Gehäuse (18) zwischen der Zwischenwand (62) und einer Gehäusewand (26) so angebracht ist, daß sich die Zwischenwand (62) zwischen der bewegbaren Federgegenlagereinrichtung (92) und dem ersten Bremsschuh (50) befindet, starre Stoßverbindungselemente (94) zwischen der Federgegenlagereinrichtung (92) und dem ersten Bremsschuh (50) verlaufen und durch die Zwischenwand (62) derart gehen, daß sich der erste Bremsschuh (50) axial mit der Federgegenlagereinrichtung (92) bewegt, eine Federeinrichtung (90) zwischen der Gehäusewand (26) und der Federgegenlagereinrichtung (92) so vorgesehen ist, daß die Federeinrichtung (90) gegen die Federgegenlagereinrichtung (92) drückt, um den ersten Bremsschuh (50) gegen die erste Reibfläche (22a) der Scheibe (22, 24) zu drücken, eine Gaskammer (68) zwischen der Zwischenwand (62) und der Federgegenlagereinrichtung (92) vorgesehen ist, so daß diese Kammer (68) dann, wenn sie ausgedehnt wird, die Federgegenlagereinrichtung (92) zwingt, die Federeinrichtung (90) zu übewinden und den ersten Bremsschuh (50) von der ersten Reibfläche (22a) der Scheibe (22, 24) zu lösen, dadurch gekennzeichnet, daß die Elemente der Scheibenbremsenanordnung eine größere Abmessung in radialer als in axialer Richtung haben, die Bremsenanordnung mit Einrichtungen zum Leiten eines Kühlgases zu den belüfteten Scheiben versehen sind, um die Wärme davon abzuleiten, und die Gaskammer ein radial verlaufender Ringbalg (68) ist.

4. Scheibenbremsenanordnung nach einem der Ansprüche 1 bis 3, bei der der erste Bremsschuh (50) eine Rückplatte (52), an der Bremsbeläge (54) angebracht sind, wobei die Rückplatte (52) parallel zur Zwischenwand (62) verläuft, und eine Verbindungseinrichtung (54) aufweist, die neben der ersten Reibfläche (22a) der radialen Scheibe (22, 24) angeordnet ist.

5. Scheibenbremsenanordnung nach einem der Ansprüche 1 bis 4, bei der die radiale belüftete Scheibe (22, 24) mit einer zweiten radialen Reibfläche (24b) auf der anderen Seite der Scheibe (22, 24) bezogen auf die erste Reibfläche (22a) der Scheibe (22, 24) versehen ist und ein zweiter ringförmiger, radial verlaufender Bremsschuh (58) im Gehäuse (18) neben der zweiten Reibfläche (24b) der Scheibe (22, 24) angebracht ist und die Einrichtungen zum Anbringen der Scheibe (22, 24) am Rad eine Paßbuchse (16) aufweisen, die am Rad (12) befestigt ist und mit axialen Nuten (44) versehen ist, so daß die Scheibe (22, 24) eine axiale Bewegung ausführen kann.

6. Scheibenbremsenanordnung nach einem der Ansprüche 1 bis 5, bei der das Zwischenwandelement (62) und das Gehäuse (18) an einem radialen Montagering (20) angebracht sind, der an der Achse (10) angebracht ist.

7. Scheibenbremsenanordnung nach einem der Ansprüche 1 bis 6, bei der das ringförmige Gehäuse (18) mit einer zentralen axialen Öffnung versehen ist, durch die die Achse (10) hindurchgeht, und ein Montagering (20) in Form eines Kreisringes an der Achse (10) angebracht ist, an dem das Gehäuse (18) und die Zwischenwand (62) angebracht sind, wobei die Scheibenmontageeinrichtungen eine Paßbuchse (16) mit axialen Nuten (44) aufweisen und die Scheibe (22, 24) eine Ringscheibe ist, die an den axialen Nuten (44) der Paßbuchse (16) angebracht ist, die sich vom Rad (12) durch eine zentrale Öffnung (42) der Scheibe erstreckt.

8. Scheibenbremsenanordnung nach einem der Ansprüche 1 bis 7, bei der die erste kreisförmige belüftete radiale Scheibe (22) zwei radiale planare Reibflächen (22a, 22b) aufweist und wenigstens eine zweite ringförmige belüftete radiale Scheibe (24) wenigstens eine erste radiale planare Reibfläche (24a) aufweist, ein ringförmiger Bremsbelag (56) zwischen den radialen Scheiben (22, 24) vorgesehen ist und Einrichtungen vorgesehen sind, die den Bremsbelag (56) an einer Drehung mit den Scheiben (22, 24) hindern, jedoch seine axiale Bewegung erlauben, und die Montageeinrichtungen für die radialen Scheiben (22, 24) eine Paßbuchse (16) aufweisen, die am Rad (12) befestigt ist und mit axialen Nuten (44) versehen ist, derart, daß wenigstens die erste radiale Scheibe (22) eine axiale Bewegung ausführen kann.

9. Scheibenbremsenanordnung nach Anspruch 8, bei der die zweite radiale Scheibe (24) mit einer zweiten radialen Reibfläche (24b) auf der anderen Seite der zweiten radialen Scheibe (24) bezogen auf die erste Reibfläche (22a) der ersten radialen Scheibe (22) versehen ist und ein zweiter ringförmiger Bremsschuh (58) im Gehäuse (18) neben der zweiten Reibfläche (24b) der Scheibe (24) vorgesehen ist, Einrichtungen vorgesehen sind, die den zweiten Bremsschuh (58) an einer Drehung mit der zweiten radialen Scheibe (24) hindern und die Montageeinrichtungen der ersten und der zweiten radialen Scheibe (22, 24) am Rad eine Paßbuchse (16) aufweisen, die am Rad (12) befestigt ist und mit axialen Nuten (44) versehen ist, so daß die Scheiben (22, 24) eine axiale Bewegung ausführen können.

10. Scheibenbremsenanordnung nach einem der Ansprüche 1 bis 9, bei der wenigstens zwei ringförmige Rotorscheiben (22, 24) vorgesehen sind.

11. Scheibenbremsenanordnung nach Anspruch 1 oder 2, bei der Staubkappen (70a, 70b) entlang der inneren und äußeren Ränder des Balges (70) vorgesehen sind.

12. Scheibenbremsenanordnung nach einem der Ansprüche 2 bis 11, bei der die Federeinrichtung (90) in Umfangsrichtung beabstandete Öffnungen (76) aufweist, die an einer Gehäusewand (26) gebildet sind, Glockenabdeckungen (78) und zwar jeweils eine in jeder Öffnung (76) vorgesehen sind und ein Federelement (90) in jeder Glockenabdeckung (78) zwischen der Glockenabdeckung (78) und der Federgegenlagereinrichtung (92) verläuft.

13. Scheibenbremsenanordnung nach einem der Ansprüche 2 bis 12, bei der das Federelement (90, 256, 356) eine Schraubenfeder ist.

14. Scheibenbremsenanordnung nach einem der Ansprüche 2 bis 12, bei der das Federelement (90, 256, 356) eine Federscheibe ist.

15. Scheibenbremsenanordnung nach einem der Ansprüche 2 bis 14, bei der Dichtungseinrichtungen (94A) zwischen jedem Stoßverbindungselement (94) und der Zwischenwand (62) vorgesehen sind.

16. Scheibenbremsenanordnung nach Anspruch 14 oder 14 und 15, bei der der Quotient aus der Höhenabmessung einer unbelasteten einzelnen Scheibe dividiert durch ihre Dicke > 1,5 ist.

17. Scheibenbremsenanordnung nach einem der Ansprüche 1 bis 16, bei der wenigstens eine flache Rille (142) quer über die Bremsfläche (22a, 22b, 24a, 24b) im wesentlichen radial dazu gebildet ist, ein Luftpolster zwischen der Rotorscheibe (22, 24) und der Bremsschuheinrichtung (50) vorgesehen sein kann, wenn die Rotorscheibe (22, 24) gedreht wird und die Bremsschuheinrichtung (50) von der Bremsfläche (22a, 22b, 24a, 24b) der Scheibe (22, 24) gelöst ist, und die Rille (142) einen Ableitungskanal zum Entfernen von Bruchstücken vom Bereich zwischen der Bremsschuheinrichtung (50) und der Bremsfläche (22a, 22b, 24a, 24b) der Scheibe (22, 24) bildet.

18. Scheibenbremsenanordnung nach einem der Ansprüche 1 bis 17, bei der die Scheibe (22, 24) eine Vielzahl von in Umfangsrichtung beabstandeten Kanälen (46) aufweist, die vom Außenumfang der Scheiben zur Mitte verlaufen und mit den zentralen Öffnungen (36, 38) am Innenrand der ringförmigen Scheibe (22, 24) verbunden sind, so daß Kühlluft von den zentralen Öffnungen (36, 38) zum Innenrand der ringförmigen Scheibe (22, 24) strömen kann, um am Außenumfang abgeführt zu werden und dadurch die Wärme zu verteilen, die in der Scheibe (22, 24) erzeugt wird, wobei die Scheibe (22, 24) aus einer Aluminiumlegierung besteht, die als DURALCAN (Marke der Alcan Aluminium Ltd.) bekannt ist.

19. Scheibenbremsenanordnung nach einem der Ansprüche 1 bis 18, bei der eine Federeinrichtung (90) zwischen der Gehäusewand (26) und der Federgegenlagereinrichtung (92) so vorgesehen ist, daß die Federeinrichtung (90) gegen die Federgegenlagereinrichtung (92) drückt, um den ersten Bremsschuh gegen die erste Reibfläche (22a) der Scheibe (22, 24) zu drücken, die Federeinrichtung (90) in Umfangsrichtung beabstandete öffnungen (76) aufweist, die an einer Gehäusewand (26) gebildet sind, Glockenabdeckungen (78) und zwar eine in jeder Öffnung (76) vorgesehen sind, und ein Federelement (90) in jeder Glockenabdeckung (78) zwischen der Glockenabdeckung (78) und der Federgegenlagereinrichtung (92) verläuft, wobei die Glockenabdeckung (78) eine Bajonettineingriffnahme mit der Gehäusewand (26) an jeder Öffnung (76) hat.

20. Scheibenbremsenanordnung nach einem der Ansprüche 1 bis 19, bei der eine Glockenabdeckung (78) außen mit einer Mutter (80) versehen ist, die einen Flansch (82) aufweist, wobei die Mutter (80) das Gewinde eines Bolzens (84) erfaßt, der Kopf des Bolzens (84) eine Blindbuchse (86) ist, die Blindbuchse (86) in der Federeinrichtung (90) liegt und einen Flansch (88) aufweist, der an der Federeinrichtung (90) anliegt, derart, daß dann, wenn es notwendig ist, die Spannung der Federeineinrichtung (90) von der Federgegenlagereinrichtung (92) abzunehmen, die Mutter (80) bis zu einer Stelle gedreht wird, an der der Kopf des Bolzens (84) gegen die Blindbuchse (86) drückt.

21. Scheibenbremsenanordnung nach einem der Ansprüche 3 bis 20, bei der ein zweiter ringförmiger radial verlaufender Gasbalg (70) zwischen dem Bremsschuh (50) und der Zwischenwand (62) vorgesehen ist, derart, daß dann, wenn die aktiven Bremsen angezogen werden, Fluiddruck anliegt, um den zweiten Balg (79) auszudehnen und dadurch den ersten Bremsschuh (50) gegen die erste Reibfläche (22a) der Scheibe (22, 24) zu drücken, und dann, wenn der Fluiddruck anliegt, um den zweiten Balg (70) auszudehnen, der erste Balg (68) abgelassen wird, so daß die Federgegenlagereinrichtung (92) gegen den ersten Bremsschuh (50) drückt, wodurch die Wirkung des zweiten Balges ergänzt wird.

22. Bremsscheibenanordnung nach einem der Ansprüche 2 bis 21, bei der das Ende der starren Stoßverbindungselemente (94) mit einem leichten Schrägwinkel versehen ist.

23. Scheibenbremsenanordnung nach einem der Ansprüche 4 bis 22, bei der die Rückplatte (52) mit einer leichten Aufweitung in Richtung der starren Stoßverbindungselemente (94) ausgebildet ist.

## Revendications

1. Ensemble de frein à disque pour une roue (12) de véhicule. dans lequel la roue (12) comprend un moyeu monté de façon à tourner (14) sur un essieu (10) du véhicule, l'ensemble de frein à disque comprend un carter (18) disposé dans les limites du contour de la roue (12) et concentrique à l'essieu (10), l'ensemble de frein à disque monté sur le véhicule et au moins un disque radial annulaire (22, 24) à l'intérieur de l'ensemble de frein et un moyen (16, 44) montant le disque (22, 24 ) sur la roue (12), le disque (22, 24) comportant au moins une première surface de frottement radiale plane (22a, b, 24a, b), un premier patin annulaire (50, 58) de frein comportant au moins une surface de frottement annulaire plane adjacente à la première surface de frottement plane (22a, b, 24a, b) du disque (22, 24) et pouvant être déplacée axialement de manière à se rapprocher et à s'éloigner de la première surface de frottement (22a, b, 24a, b) du disque (22, 24) afin de venir en contact de frottement avec cette surface et de s'en dégager, un moyen pour empêcher le premier patin (50, 58) de frein de tourner avec le disque (22, 24), l'ensemble de frein à disque étant caractérisé en ce qu'une vessie annulaire (70) à gaz est disposée entre une paroi (28, 62) de carter et le premier patin (50, 58) de frein, de telle sorte que lors d'une expansion , les freins de service exercent un freinage du fait de application du patin (50, 58) de frein sur la première surface de frottement (22a, b, 24a, b) du disque (22, 24), un moyen formant soupape à ouverture rapide (126) est monté sur la paroi du carter et communique avec la vessie (70) pour évacuer le gaz de la vessie (70) afin d'accélérer la variation de la vessie, les éléments de l'ensemble de frein à disque ayant une dimension plus grande dans la direction radiale que dans la direction axiale.

2. Ensemble de frein à disque selon la revendication 1, dans lequel un élément formant paroi intermédiaire annulaire (62) est monté à l'intérieur du carter (18) et est fixé à ce dernier en s'étendant parallèlement au disque radial (22, 24) et en étant situé de telle sorte que le premier patin (50) de frein se déplace axialement entre la paroi intermédiaire (62) et le disque radial (22, 24), un moyen mobile (92) d'appui d'élément élastique est monté en vue d'un déplacement axial à l'intérieur du carter (18) entre la paroi intermédiaire (62) et une paroi (26) du carter de telle sorte que cette paroi intermédiaire (62) se trouve entre le moyen mobile (92) d'appui d'élément élastique et le premier patin (50) de frein, des éléments rigides (94) formant tiges de poussée s'étendent entre le moyen (92) d'appui d'élément élastique et le premier patin (50) de frein et dépassent de la paroi intermédiaire (62) de telle sorte que le premier patin de frein (50) se déplace axialement avec le moyen (92) d'appui d'élément élastique, un moyen élastique (90) est disposé entre la paroi (26) de carter et le moyen (92) d'appui d'élément élastique de telle sorte que le moyen élastique (90) exerce une poussée contre le moyen (92) d'appui d'élément élastique pour presser le premier patin (50) de frein contre la première surface de frottement (22a) du disque (22, 24), une chambre à gaz (68) est présente entre la paroi intermédiaire (62) et le moyen (92) d'appui d'élément élastique, grâce à quoi cette chambre (68), lorsqu'elle se dilate, force le moyen (92) d'appui d'élément élastique à contrecarrer le moyen élastique (90) afin que le premier patin (50, 58) de frein se dégage de la première surface de frottement (22a ) du disque (22, 24).

3. Ensemble de frein à disque pour une roue (12) de véhicule, dans lequel la roue (12) comprend un moyeu monté de façon à tourner (14) sur un essieu (10) du véhicule, l'ensemble de frein à disque est disposé dans les limites du contour de la roue (12) et est concentrique à l'essieu (10), l'ensemble de frein à disque comprend un carter annulaire (18) monté sur le véhicule et au moins un disque radial annulaire ventilé (22, 24) à l'intérieur du boîtier (18) ainsi qu'un moyen (16, 44) montant le disque (22, 24 ) sur la roue (12), le disque (22, 24) comportant au moins une première surface de frottement radiale plane (22a, b, 24a, b), un premier patin de frein annulaire (50, 58) comportant au moins une surface de frottement annulaire plane adjacente à la première surface de frottement plane (22a, b, 24a, b) du disque (22, 24) pouvant être rapprochée et éloignée de la première surface de frottement (22a, b, 24a, b) du disque (22, 24) afin de venir en contact de frottement avec cette surface et de s'en dégager, le premier patin (50, 58) de frein se présentant sous la forme d'une plaque annulaire radiale comportant au moins une surface plane destinée à venir en contact avec la première surface plane de frottement, des moyens sont présents pour empêcher le premier patin (50, 58) de frein de tourner avec le disque (22, 24), un élément formant paroi intermédiaire annulaire (62) est monté à l'intérieur du carter (18) et est fixé à ce dernier en s'étendant parallèlement au disque radial (22, 24) et en étant situé de telle sorte que le premier patin (50) de frein se déplace axialement entre la paroi intermédiaire (62) et le disque radial (22, 24), un moyen mobile (92) d'appui d'élément élastique est monté en vue d'un déplacement axial à l'intérieur du carter (18) entre la paroi intermédiaire (62) et une paroi (26) du carter de telle sorte que cette paroi intermédiaire (62) se trouve entre le moyen mobile (92) d'appui d'élément élastique et le premier patin (50) de frein, des éléments rigides (94) formant tiges de poussée s'étendent entre le moyen (92) d'appui d'élément élastique et le premier patin (50) de frein et dépassent de la paroi intermédiaire (62) de telle sorte que le premier patin (50) de frein se déplace axialement avec le moyen (92) d'appui d'élément élastique, un moyen élastique (90) est disposé entre la paroi (26) de carter et le moyen (92) d'appui d'élément élastique, de telle sorte que le moyen élastique (90) exerce une poussée contre le moyen (92) d'appui d'élément élastique pour presser le premier patin (50) de frein contre la première surface de frottement (22a) du disque (22, 24), une chambre à gaz (68) est présente entre la paroi intermédiaire (62) et le moyen (92) d'appui d'élément élastique, grâce à quoi cette chambre (68), lorsqu'elle se dilate, force le moyen (92) d'appui d'élément élastique à contrecarrer le moyen élastique (90) afin que le premier patin (50, 58) de frein se dégage de la première surface de frottement (22a ) du disque (22, 24).caractérisé en ce que les éléments de l'ensemble de frein de disque ont une dimension supérieure dans la direction radiale à celle dans la direction axiale, l'ensemble de frein est pourvu d'un moyen destiné à diriger un gaz de refroidissement sur les disques ventilés pour en dissiper la chaleur, et la chambre à gaz est une vessie annulaire s'étendant radialement (68).

4. Ensemble de frein à disque selon l'une quelconque des revendications 1 à 3, dans lequel le premier patin (50) de frein comprend une plaque d'appui (52) supportant des garnitures (54) de frein, la plaque d'appui (52) s'étendant parallèlement à la paroi intermédiaire (62) et la garniture (54) étant adjacente à la première surface de frottement (22a) du disque radial (22, 24).

5. Ensemble de frein à disque selon l'une quelconque des revendications 1 à 4, dans lequel le disque radial ventilé (22, 24) est pourvu d'une deuxième surface de frottement radiale (24b) sur l'autre côté du disque (22, 24) par rapport à ladite première surface de frottement (22a) du disque (22, 24), et un deuxième patin (58) de frein, annulaire et s'étendant radialement, est monté à l'intérieur du carter (18) de façon adjacente à la deuxième surface de frottement (24b) du disque (22, 24), et le moyen servant au montage disque (22, 24) sur la roue comprend un manchon adaptateur (16) fixé à la roue (12) et pourvu de cannelures axiales (44) de telle sorte que le disque (22, 24) puisse effectuer un déplacement axial.

6. Ensemble de frein à disque selon l'une quelconque des revendications 1 à 5, dans lequel l'élément formant paroi intermédiaire (62) et le carter (18) sont montés sur une bague de montage radiale (20) montée sur l'essieu (10).

7. Ensemble de frein à disque selon l'une quelconque des revendications 1 à 6, dans lequel le carter annulaire (18) est pourvu d'une ouverture centrale axiale à travers laquelle s'étend l'essieu d'un côté à l'autre de celle-ci, et une bague de montage (20) sous la forme d'une bague annulaire est montée sur l'essieu (10) sur lequel le carter (18) et la paroi intermédiaire (62) sont montés, le moyen de montage de disque comprend un manchon adaptateur (16) comportant des cannelures axiales (44), le disque (22, 24) est un disque annulaire monté sur les cannelures axiales (44) de manchon adaptateur (16) qui s'étend depuis la roue (12) à travers une ouverture centrale (42) du disque.

8. Ensemble de frein à disque selon l'une quelconque des revendications 1 à 7, dans lequel le premier disque annulaire radial ventilé (22) comporte deux surfaces de frottement radiales planes (22a, 22b), et au moins un deuxième disque annulaire radial ventilé (24) comporte au moins une première surface de frottement radiale et plane (24a), une garniture annulaire (56) de frein est présente entre les disques radiaux (22, 24), et des moyens sont présents pour empêcher la garniture (56) de frein de tourner avec les disques (22, 24) tout en en permettant un déplacement axial et le moyen servant au montage des disques radiaux (22, 24) comprend un manchon adaptateur (16) fixé à la roue (12) et pourvu d'une cannelure axiale (44) de telle sorte qu'au moins le premier disque radial (22) puisse effectuer un déplacement axial.

9. Ensemble de frein selon la revendication 8, dans lequel le deuxième disque radial (24) est pourvu d'une deuxième surface de frottement radiale (24b) sur l'autre côté du deuxième disque radial (24) par rapport à la première surface de frottement (22a) du premier disque radial (22), et un deuxième patin annulaire (58) de frein est monté à l'intérieur du carter (18) de façon adjacente à la deuxième surface de frottement (24b) du disque (24), des moyens sont présents pour empêcher le deuxième patin (58) de frein de tourner avec le deuxième disque radial (24), et le moyen servant au montage des premier et deuxième disques radiaux (22, 24) sur la roue comprend un manchon adaptateur (16) fixé à la roue (12) et pourvu d'une cannelure axiale (44) de telle sorte que les disques puissent effectuer un déplacement axial.

10. Ensemble de frein à disque selon l'une quelconque des revendications 1 à 9, dans lequel se trouvent au moins deux disques annulaires formant rotors (22, 24).

11. Ensemble de frein à disque selon le revendications 1 ou 2, dans lequel des chapeaux anti-poussière (70a, 70b) sont présents le long des parties marginales intérieure et extérieure de la vessie (70).

12. Ensemble de frein à disque selon l'une quelconque des revendications 2 à 11, dans lequel le moyen élastique (90) comprend des ouvertures (76) espacées les unes des autres dans le sens circonférenciel et formées dans une paroi (26) du carter, des couvercles (78) en forme de cloche présents, à raison d'un sur chaque ouverture (76), et un élément élastique (90) dans chaque couvercle (78) en forme de cloche s'étendant entre le couvercle (78) en forme de cloche et le moyen (92) d'appui d'élément élastique.

13. Ensemble de frein à disque selon l'une quelconque des revendications 2 à 12, dans lequel l'élément élastique (90, 256, 356) est un ressort hélicoïdal.

14. Ensemble de frein selon l'une quelconque des revendications 2 à 12, dans lequel l'élément élastique (90, 256, 356) est une rondelle élastique.

15. Ensemble de frein à disque selon l'une quelconque des revendications 2 à 14, dans lequel des moyens d'étanchéité (94A) sont présents entre chaque élément (94) formant tige de poussée et la paroi intermédiaire (62).

16. Ensemble de frein à disque selon la revendication 14 ou selon les revendications 14 et 15, dans lequel le quotient de la hauteur libre d'une rondelle unique non chargée par l'épaisseur de cette rondelle est supérieur à 1,5.

17. Ensemble de frein à disque selon l'une quelconque des revendications 1 à 16, dans lequel au moins une rainure (142) peu profonde est formée en travers de la surface de freinage (22a, 22b, 24a, 24b) d'une façon générale dans le sens radial de cette dernière, grâce à quoi un coussin d'air peut être présent entre le disque formant rotor (22, 24) et le moyen formant patin (50) de frein quand le disque formant rotor (22, 24) est entraîné en rotation et le moyen formant patin (50) de frein est dégagé de la surface de freinage (22a, 22b, 24a, 24b) du disque (22, 24), et la rainure (142) constitue un canal de drainage servant à évacuer des débris de l'espace compris entre le moyen formant patin (50) de frein et la surface de freinage (22a, 22b, 24a, 24b) du disque (22, 24).

18. Ensemble de frein à disque selon l'une quelconque des revendications 1 à 17, dans lequel le disque (22, 24) comporte une pluralité de canaux (46) espacés dans le sens circonférenciel et s'étendant depuis la périphérie du disque en direction du centre de manière à communiquer avec des ouvertures centrales (36, 38) présentes dans la partie marginale intérieure du disque annulaire (22, 24) de telle sorte que l'air de refroidissement puisse passer par les ouvertures centrales (36, 38) présentes dans la partie marginale intérieure du disque annulaire (22, 24) pour s'échapper à la périphérie extérieure de ce disque afin de dissiper la chaleur générée dans le disque (22, 24), le disque (22, 24) étant composé d'un matériau composite à base d'aluminium connu sous le nom de DURALCAN (une marque de commerce de Alcan Aluminum Limited).

19. Ensemble de frein à disque selon l'une quelconque des revendications 1 à 18, dans lequel un moyen élastique (90) est disposé entre la paroi (26) du carter et le moyen (92) d'appui d'élément élastique de telle sorte que le moyen élastique (90) exerce une poussée Nulle moyen (92) d'appui d'élément élastique pour presser le premier patin de frein contre la première surface de frottement (22a) du disque (22, 24), le moyen élastique (90) comprend des ouvertures (76) espacées les unes des autres dans le sens circonférenciel et formées dans la paroi (26) du carter, des couvercles (78) en forme de cloches sont présents, à raison d'un dans chaque ouverture (76), et un élément élastique (90) présent dans chaque couvercle (78) en forme de cloche s'étend entre le couvercle (78) en forme de cloche et le moyen (92) d'appui d'élément élastique, le couvercle (78) en forme de cloche étant assemblé par un accouplement du type à baïonnette avec la paroi (26) de carter à chaque ouverture (76).

20. Ensemble de frein à disque selon l'une quelconque des revendications 1 à 19, dans lequel un couvercle (78) en forme de cloche est pourvu extérieurement d'un écrou (80) muni d'un rebord (82), cet écrou (80) étant vissé sur le filetage d'une vis (84), la tête de la vis (84) est un manchon borgne (86), le manchon borgne (86) se trouve dans le moyen élastique (90) et comporte un rebord (88) qui porte contre le moyen élastique (90) de telle sorte que s'il devient nécessaire d'éliminer la force exercée par le moyen élastique (90) sur le moyen (92) d'appui d'élément élastique, on fait tourner l'écrou (80) jusqu'au moment où la tête de la vis (84) exerce une pression sur le manchon borgne (86).

21. Ensemble de frein à disque selon l'une quelconque des revendications 3 à 20, dans lequel une deuxième vessie (70) à gaz , annulaire et s'étendant radialement, est disposée entre le patin (50) de frein et la paroi intermédiaire (62) de telle sorte que, lorsque les freins actifs sont serrés, la pression du fluide est appliquée de manière à dilater la deuxième vessie (70) afin de pousser le premier patin (50) de frein contre la première surface de frottement (22a) du disque (22, 24), et, quand la pression du fluide est appliquée de manière à dilater la deuxième vessie (70), la première vessie (68) se dégonfle, de sorte que le moyen (92) d'appui d'élément élastique pousse le premier patin (50) de frein en supplément à l'action de la deuxième vessie (70).

22. Ensemble de frein à disque selon l'une quelconque des revendications 2 à 21, dans lequel l'extrémité des éléments formant tiges de poussée rigides (94) est légèrement chanfreiné.

23. Ensemble de frein à disque selon l'une quelconque des revendications 4 à 22, dans lequel la plaque d'appui (52) présente un léger évasement dans la direction des éléments formant tiges de poussée rigides (94).
